# EUROPÄISCHE PATENTANMELDUNG

(11) **EP 1 116 863 A2**
(43) Veröffentlichungstag der Anmeldung: **18.07.2001**
(21) Anmeldenummer: 01100084.1
(22) Anmeldetag: 11.01.2001
(51) Int. Cl.: F01N 3/20, F01N 3/08

(54) **Abgasanlage und Verfahren zur Reinigung eines Abgases einer Verbrennungskraftmaschine, insbesondere einer Dieselkraftmaschine**

(30) Priorität: 15.01.2000 DE 10001431
(71) Anmelder: Volkswagen Aktiengesellschaft, 38436 Wolfsburg (DE)
(72) Erfinder: Engeler, Werner, 38527 Meine (DE); Doré, Pascal, 38518 Gifhorn (DE); Bechmann, Olaf, Dr., 30167 Hannover (DE); Kösters, Martina, Dr., 30161 Hannover (DE)

(57) **Zusammenfassung**

Die Erfindung betrifft eine Abgasanlage und ein Verfahren zur Reinigung eines Abgases einer Verbrennungskraftmaschine, insbesondere einer Dieselkraftmaschine, mit einem, in einem Abgaskanal angeordneten Oxidationskatalysator.

Es ist vorgesehen, daß stromaufwärts des Oxidationskatalysators (16) eine Vorrichtung (30) zur Erzeugung eines Ozonmassenstromes (m_{Ozon}) im Abgaskanal (14) angeordnet ist und der Vorrichtung (30) ein Steuergerät (24) zur quantitativen Steuerung des Ozonmassenstromes (m_{Ozon}) in Abhängigkeit wenigstens eines Betriebsparameters der Verbrennungskraftmaschine (12) zugeordnet ist.

## Beschreibung

Die Erfindung betrifft eine Abgasanlage und ein Verfahren zur Reinigung eines Abgases einer Verbrennungskraftmaschine, insbesondere einer Dieselkraftmaschine, mit den in den Oberbegriffen der Ansprüche 1 und 13 genannten Merkmalen.

Es ist bekannt, ein von einer Verbrennungskraftmaschine, insbesondere einem Dieselmotor, erzeugtes Abgas einer Abgasnachbehandlung zu unterziehen, indem es durch einen in einem Abgaskanal angeordneten Katalysator geführt wird. Einfache Oxidationskatalysatoren, die üblicherweise zur Abgasnachbehandlung in Dieselkraftmaschinen verwendet werden, umfassen im wesentlichen ein katalytisch aktives Material, das auf der Oberfläche einer porösen Trägersubstanz fixiert ist. Das katalytisch aktive Material ist meistens ein Edelmetall, häufig ein Metall der Platingruppe. Eine Abgasreinigung an Oxidationskatalysatoren findet statt, indem reduzierende Schadstoffbestandteile des Abgases, zu denen unverbrannte Kohlenwasserstoffe (HC) sowie Kohlenmonoxid (CO) zählen, durch im Abgas vorhandene Stickoxide und Sauerstoff zu weniger umweltrelevanten Produkten oxidiert werden. Zudem beschleunigt der Oxidationskatalysator die Oxidation von Stickstoffmonoxid (NO) zu Stickstoffdioxid (NO₂), welches für die Unterhaltung eines kontinuierlichen Partikelabbrandes im Dieselmotorgas bei niedrigen Temperaturen bei zirka 300°C eine wichtige Rolle spielt. Diese Reaktionen werden durch die Gegenwart der katalytischen Materialien sowie einer erhöhten Katalysatortemperatur ermöglicht.

Nachteilig an einer solchen Abgasreinigungsanlage ist der begrenzte Wirkungsgrad des Oxidationskatalysators, der - um eine ausreichende Verweildauer der Abgasschadstoffe im Katalysator zu gewährleisten - eine entsprechend große Katalysatordimensionierung erfordert. Weiterhin nachteilig ist, daß eine Möglichkeit, den Wirkungsgrad des Katalysators flexibel an eine aktuelle Betriebssituation anzupassen, mit Ausnahme der Möglichkeit einer Temperaturvariierung praktisch nicht besteht. Beispielsweise reicht der Wirkungsgrad während einer Kaltstartphase, bei der der Katalysator noch nicht seine erforderliche Betriebstemperatur besitzt, nicht aus, um die entstehenden Schadstoffe quantitativ abzubauen.

Der Erfindung liegt die Aufgabe zugrunde, eine Abgasanlage und ein Verfahren der gattungsgemäßen Art bereitzustellen, wobei ein gegenüber herkömmlichen Abgasanlagen verbesserter Wirkungsgrad eines Oxidationskatalysators erreicht werden soll, welcher in Abhängigkeit der Betriebsbedingungen variabel steuerbar sein soll.

Erfindungsgemäß wird diese Aufgabe durch eine Abgasanlage mit den im Anspruch 1 genannten Merkmalen und durch ein Verfahren mit den im Anspruch 13 genannten Merkmalen gelöst. Es wurde gefunden, daß bereits geringe Anteile von Ozon in einem Abgasstrom die Umsetzung von Schadstoffen an einem Oxidationskatalysator deutlich beschleunigen. Dadurch, daß stromaufwärts des Oxidationskatalysators eine Vorrichtung zur Erzeugung eines Ozonmassenstromes im Abgaskanal angeordnet ist und der Vorrichtung ein Steuergerät zur quantitativen Steuerung des Ozonmassenstromes in Abhängigkeit wenigstens eines Betriebsparameters zugeordnet ist, kann eine Oxidationsgeschwindigkeit am Oxidationskatalysator und somit der Wirkungsgrad des Katalysators signifikant erhöht und in Abhängigkeit aktueller Betriebsbedingungen der Verbrennungskraftmaschine gesteuert werden.

In einer bevorzugten Ausgestaltung der erfindungsgemäßen Abgasanlage umfaßt die Vorrichtung eine UV-Quelle zur Emission einer UV-Strahlung mit einer Wellenlänge < 370 nm, wobei mindestens ein Teil des Abgasstromes einer von der UV-Quelle emittierten UV-Strahlung ausgesetzt ist. Dadurch wird ein Teil des im Abgasstrom enthaltenen Sauerstoffs auf bekannte Weise angeregt und zu Ozon umgesetzt.

Ferner ist in bevorzugter Ausgestaltung der Erfindung vorgesehen, daß die UV-Quelle direkt im Abgaskanal angeordnet ist. Alternativ kann die UV-Quelle auch in einer seitlichen Aussparung des Abgaskanals untergebracht sein.

In weiterer bevorzugter Ausgestaltung der Erfindung ist vorgesehen, dem Steuergerät ein Stellmittel zur quantitativen Steuerung eines Ozonmassenstromes zuzuordnen. Im Falle einer kontinuierlich betriebenen UV-Quelle kann das Stellmittel beispielsweise ein Spannungsregler zur Regelung einer Strahlungsleistung der UV-Quelle sein, so daß sich eine Konzentration angeregter Sauerstoffmoleküle regeln läßt. Als kontinuierlich betriebene UV-Quellen kommen beispielsweise konventionelle Quecksilberröhren oder UV-Laser in Frage. Wenn gemäß einer alternativen Ausgestaltung eine in Intervallen betriebene UV-Quelle eingesetzt wird, beispielsweise eine UV-Blitzlampe oder ein gepulster UV-Laser, kann ein Taktgeber zur Regelung einer Betriebsfrequenz als Stellmittel dienen.

In einer besonders bevorzugten Ausführungsform der erfindungsgemäßen Abgasanlage umfaßt die Vorrichtung zur Erzeugung einer Ozonmassenstromes einen Ozongenerator, welcher auf an sich bekannte Weise Ozon mittels einer stillen elektrischen Entladung in einer von dem Abgasstrom durchströmten Ozonisatorröhre erzeugt. Ozonisatorröhren erzeugen über die Anregung von O₂-Molekülen Ozon.

Es ist weiter bevorzugt, daß der Ozongenerator in einem von einem Teilstrom des Abgases durchströmten Seitenarm (Bypass) des Abgaskanals angeordnet ist.

Im Falle der Verwendung eines Ozongenerators kann der Ozonmassenstrom gesteuert werden, indem ein Spannungsregler zur Regelung einer Leistung des Ozongenerators als Stellmittel verwendet wird. In einer alternativen Ausgestaltung ist ein Mittel zur Steuerung einer Stärke des den Ozongenerator durchströmenden Teilstroms des Abgases vorgesehen. Denkbar ist beispielsweise die Verwendung einer Drosselklappe.

Entsprechend dem erfindungsgemäßen Verfahren wird mindestens einem Teil eines Abgasstromes ein Ozonmassenstrom zugeführt und dieser zusammen mit dem Abgasstrom über eine katalytische Oberfläche des Oxidationskatalysators geleitet, wobei ein Verhältnis von Ozonmassenstrom zu Abgasmassenstrom in Abhängigkeit wenigstens eines Betriebsparameters der Verbrennungskraftmaschine, beispielsweise einer Motordrehzahl, einer zugeführten Kraftstoffmenge oder eines angesaugten Luftvolumens, geregelt wird.

In einer bevorzugten Ausgestaltung wird der Ozonmassenstrom in Abhängigkeit einer im Abgasstrom gemessenen oder einer empirisch oder theoretisch ermittelten Konzentration von mindestens einer Abgaskomponente geregelt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: den schematischen Aufbau einer erfindungsgemäßen Abgasanlage unter Verwendung einer UV-Quelle und
- Figur 2: den schematischen Aufbau einer erfindungsgemäßen Abgasanlage unter Verwendung eines Ozongenerators.

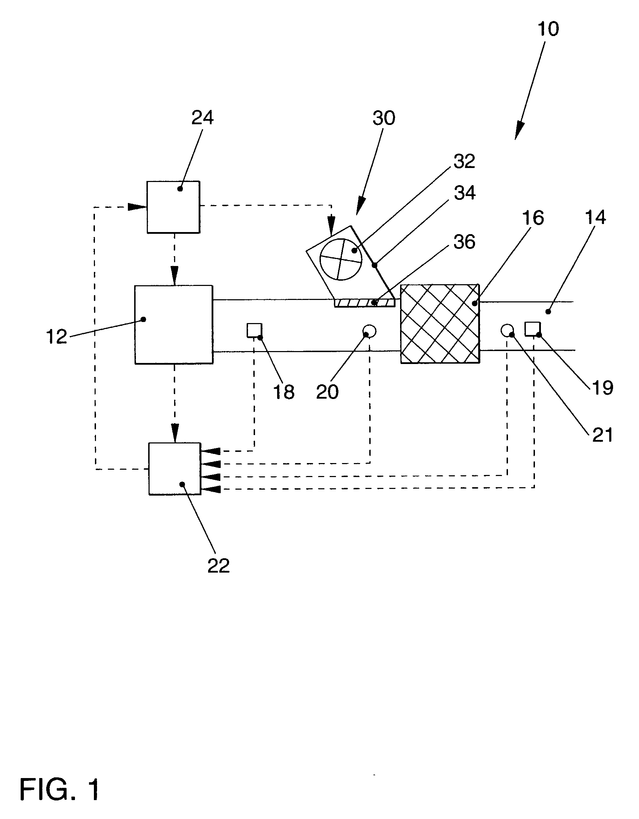

Figur 1 zeigt in schematischer Darstellung eine Abgasanlage 10 gemäß einer bevorzugten Ausführung der vorliegenden Erfindung. Die Abgasanlage 10 einer Verbrennungskraftmaschine 12 umfaßt einen Abgaskanal 14, welcher einen Oxidationskatalysator 16 sowie die Gassonden 18, 19 und Temperatursonden 20, 21 beherbergt. Die Gas- und Temperatursonden 18, 19, 20, 21 sind entsprechend ihrer zweckmäßigen Bestimmung an verschiedenen Orten des Abgaskanales 14 vor und hinter dem Oxidationskatalysator 16 angeordnet. Die Abgasanlage 10 umfaßt ferner eine Vorrichtung zur Erzeugung eines Ozonmassenstromes, die in ihrer Gesamtheit mit dem Bezugszeichen 30 gekennzeichnet ist. Die Vorrichtung 30 beinhaltet eine UV-Quelle 32, welche in einer seitlichen Aussparung 34 des Abgaskanals 14 untergebracht ist. Ebenso denkbar ist, die UV-Quelle 32 direkt im Abgaskanal 14 vor dem Oxidationskatalysator 16 anzuordnen. In der dargestellten Ausgestaltung ist die seitliche Aussparung 34 mit der UV-Quelle 32 durch ein UV-transparentes Material 36, das beispielsweise Quarzglas oder eine UV-durchlässige Folie sein kann, von einem den Abgaskanal 14 durchströmenden Abgasmassenstrom isoliert. Auf diese Weise kann die UV-Quelle 32 vor den hohen Temperaturen und vor aggressiven Bestandteilen des Abgases geschützt werden. Da Ozon eine relativ kurzlebige Verbindung ist, hat es sich als vorteilhaft erwiesen, das Ozon möglichst unmittelbar am Ort seiner bestimmungsgemäßen Wirkung, das heißt am Oxidationskatalysator 16, zu erzeugen. Aus diesem Grunde ist die seitliche Aussparung 34 des Abgaskanales 14 derart ausgerichtet, daß die UV-Quelle 32 einen Eintrittsbereich des Oxidationskatalysators 16 bestrahlt. Auf diese Weise wird unmittelbar vor dem Oxidationskatalysator beziehungsweise in seinem Eintrittsbereich ein Ozonmassenstrom erzeugt, der zusammen mit dem Abgasstrom über eine katalytische Oberfläche des Oxidationskatalysators 16 geführt wird.

Die Größe eines nach der beschriebenen Weise erzeugten Ozonmassenstroms m_{Ozon} wird im Verhältnis zum Abgasmassenstrom m_{Abgas} in Abhängigkeit wenigstens eines Betriebsparameters geregelt. Ein solcher Betriebsparameter kann etwa eine im Abgasstrom gemessene Konzentration einer Abgaskomponente sein, welche mittels mindestens einer der Gassensoren 18, 19 erfaßt wird. Solche Gassensoren 18, 19 - etwa Lambdasonden oder NOₓ-Sonden - sind bekannt und sollen daher an dieser Stelle nicht näher erläutert werden. Die Meßsignale der Gassensoren 18, 19 werden an ein Steuergerät 22 weitergegeben, welches diese Signale verarbeitet und mittels geeigneter Stellmittel 24 eine Leistung der UV-Quelle 32 und somit eine Stärke des Ozonmassenstroms m_{Ozon} steuert. Wie oben beschrieben, kann diese Steuerung in einer Spannungsregelung der Strahlungsleistung einer kontinuierlich betriebenen UV-Quelle 32 oder in einer Regelung einer Betriebsfrequenz einer intervallbetriebenen UV-Quelle 32 bestehen. Wird beispielsweise durch die Gassonde 19 ein Schadstoffdurchbruch durch den Oxidationskatalysator 16 detektiert, so erhöht das Steuergerät 22 die Strahlungsleistung der UV-Quelle 32, indem mittels des als Spannungsregler ausgebildeten Stellmittels 26 die an der UV-Quelle 32 anliegende Spannung erhöht wird. Alternativ kann eine Konzentration einer Komponente im Abgas mittels empirischer oder theoretischer Zusammenhänge anhand von Betriebsparametern der Verbrennungskraftmaschine 12 ermittelt werden. Selbstverständlich ist es darüber hinaus möglich, daß das Steuergerät 22 die Betriebsparameter der Verbrennungskraftmaschine 12 über die Stellmittel 24 in bekannter Weise beeinflußt.

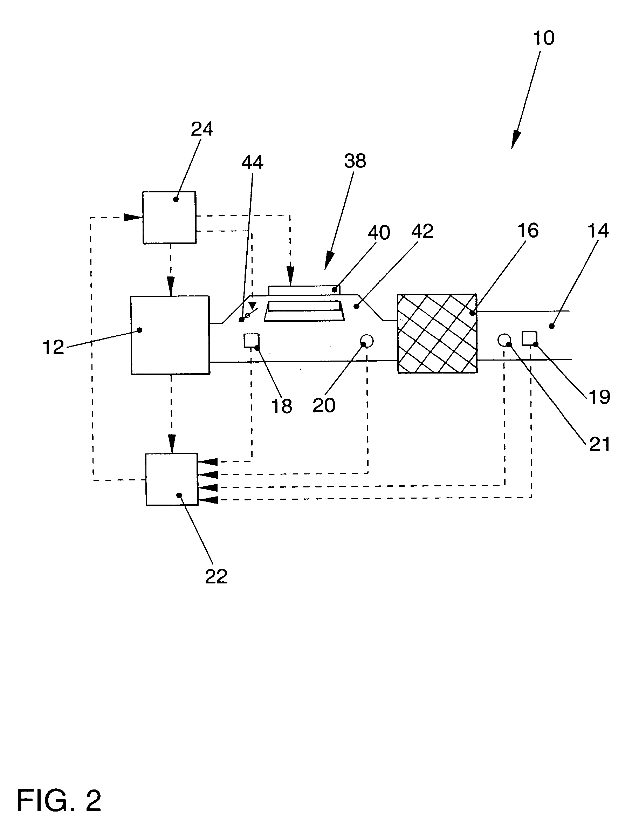

Figur 2 zeigt den Aufbau einer Abgasanlage gemäß einer weiteren bevorzugten Ausgestaltung der Erfindung. Gleiche Bauelemente sind durch identische Bezugszeichen wie in Figur 1 bezeichnet, die an dieser Stelle nicht nochmals erwähnt werden. Gemäß dieser Ausgestaltung wird der Ozonmassenstrom m_{Ozon} mittels eines insgesamt mit 38 gekennzeichneten Ozongenerators erzeugt. Der Ozongenerator 38 umfaßt eine in einem Seitenarm (Bypass) 42 des Abgaskanales 14 angeordnete Ozonisatorröhre 40. Ein den Seitenarm 42 durchströmender Abgasstrom kann mittels einer Drosselklappe 44 reguliert werden. Der Seitenarm 42 und die Ozonisatorröhre 40 wird von einem Teil des Abgasstromes durchströmt. Durch eine an der Ozonisatorröhre 40 angelegte niederfrequente Spannung wird eine stille elektrische Ladung aufrechterhalten, wodurch der im Abgas enthaltene Sauerstoff angeregt und teilweise zu Ozon umgesetzt wird. Die Größe des Ozonmassenstromes m_{Ozon} kann beispielsweise in Abhängigkeit einer durch die Gassonden 18, 19 gemessenen Gaskonzentration oder in Abhängigkeit eines Betriebsparameters der Verbrennungskraftmaschine 12 geregelt werden, indem entweder die an der Ozonisatorröhre 40 anliegende Spannung variiert wird oder der den Seitenarm 42 durchströmende Abgasstrom mittels der Drosselklappe 44 verändert wird. Selbstverständlich kann die Größe des Ozonmassenstromes m_{Ozon} auch durch die simultane Einflußnahme auf beide Steuergrößen erreicht werden.

Insgesamt kann durch die erfindungsgemäße Abgasanlage und das erfindungsgemäße Verfahren der Wirkungsgrad eines Oxidationskatalysators erheblich verbessert werden. Damit verbunden ist eine Verkürzung der erforderlichen Verweildauer der umzusetzenden Gaskomponenten am Katalysator, so daß eine erhebliche Reduzierung der Katalysatordimensionierung erreicht werden kann. auf diese Weise können kostenintensive Materialien, insbesondere die katalytisch aktiven Edelmetalle, eingespart werden. Darüber hinaus ist es durch die erfindungsgemäße quantitative Steuerung des Ozonmassenstromes möglich, den Wirkungsgrad des Katalysators auf die vorherrschenden Betriebsbedingungen abzustimmen.

## Patentansprüche

1. Abgasanlage zur Reinigung eines Abgases einer Verbrennungskraftmaschine, insbesondere einer Dieselkraftmaschine, mit einem, in einem Abgaskanal angeordneten Oxidationskatalysator, **dadurch gekennzeichnet**, daß stromaufwärts des Oxidationskatalysators (16) eine Vorrichtung (30) zur Erzeugung eines Ozonmassenstromes (m_{Ozon}) im Abgaskanal (14) angeordnet ist und der Vorrichtung (30) ein Steuergerät (24) zur quantitativen Steuerung des Ozonmassenstromes (m_{Ozon}) in Abhängigkeit wenigstens eines Betriebsparameters der Verbrennungskraftmaschine (12) zugeordnet ist.

2. Abgasanlage nach Anspruch 1, **dadurch gekennzeichnet**, daß die Vorrichtung (30) eine UV-Quelle (32) umfaßt und mindestens ein Teil eines Abgasstroms einer von der UV-Quelle emittierten UV-Strahlung ausgesetzt ist.

3. Abgasanlage nach Anspruch 2, **dadurch gekennzeichnet**, daß die UV-Quelle (32) in dem Abgaskanal (14) angeordnet ist.

4. Abgasanlage nach Anspruch 2, **dadurch gekennzeichnet**, daß die UV-Quelle (32) in einer seitlichen Aussparung (34) des Abgaskanals (14) angeordnet ist.

5. Abgasanlage nach einem der vorhergehenden Ansprüche, **dadurch gekennzeichnet**, daß die UV-Quelle (32) durch ein für UV-Strahlung transparentes Material (36) von dem Abgasstrom isoliert ist.

6. Abgasanlage nach einem der vorhergehenden Ansprüche, **dadurch gekennzeichnet**, daß dem Steuergerät (22) ein Stellmittel (24) zur quantitativen Steuerung des Ozonmassenstromes (m_{Ozon}) zugeordnet ist.

7. Abgasanlage nach Anspruch 6, **dadurch gekennzeichnet**, daß das Stellmittel (24) ein Spannungsregler zur Regelung einer Strahlungsleistung einer routinierlich betriebenen UV-Quelle (32) ist.

8. Abgasanlage nach Anspruch 6, **dadurch gekennzeichnet**, daß das Stellmittel (24) ein Taktgeber zur Regelung einer Betriebsfrequenz einer intervall-betriebenen UV-Quelle (32) ist.

9. Abgasanlage nach Anspruch 1, **dadurch gekennzeichnet**, daß die Vorrichtung (30) einen Ozongenerator (38) umfaßt, welcher Ozon mittels einer elektrischen Entladung in einer von dem Abgasstrom durchströmten Ozonisatorröhre (40) erzeugt.

10. Abgasanlage nach Anspruch 1 oder 9, **dadurch gekennzeichnet**, daß der Ozongenerator (38) in einem von einem Teilstrom des Abgases durchströmten Seitenarm (42) des Abgaskanals (14) angeordnet ist.

11. Abgasanlage nach einem der Ansprüche 6, 9 oder 10, **dadurch gekennzeichnet**, daß das Stellmittel (26) ein Spannungsregler zur Regelung einer Leistung des Ozongenerators (38) ist.

12. Abgasanlage nach einem der Ansprüche 6, 9 oder 10, **dadurch gekennzeichnet**, daß das Stellmittel (26) ein Mittel zur Steuerung einer Stärke des den Ozongenerator durchströmenden (38) Teilstroms des Abgases ist.

13. Verfahren zur Reinigung eines Abgases einer Verbrennungskraftmaschine, insbesondere einer Dieselkraftmaschine, bei der das Abgas über einen Oxidationskatalysator geführt wird, **dadurch gekennzeichnet**, daß mindestens einem Teil eines Abgasstromes ein Ozonmassenstrom (m_{Ozon}) zugeführt wird und dieser zusammen mit dem Abgasstrom über eine katalytische Oberfläche des Oxidationskatalysators (16) geleitet wird, wobei ein Verhältnis von Ozonmassenstrom (m_{Ozon}) zu Abgasmassenstrom (m_{Abgas}) in Abhängigkeit wenigstens eines Betriebsparameters der Verbrennungskraftmaschine (12) geregelt wird.

14. Verfahren nach Anspruch 13, **dadurch gekennzeichnet**, daß der Ozonmassenstrom (m_{Ozon}) in Abhängigkeit einer im Abgasstrom gemessenen oder einer empirisch oder theoretisch ermittelten Konzentration von mindestens einer Abgaskomponente geregelt wird.
